Europäisches Patentamt

European Patent Office

Office européen des brevets

(11) Veröffentlichungsnummer: **0 310 994**
**A1**

(12) **EUROPÄISCHE PATENTANMELDUNG**

(21) Anmeldenummer: **88116348.9**

(22) Anmeldetag: **03.10.88**

(51) Int. Cl.⁴: **B65G 69/04**

(30) Priorität: **05.10.87 AT 2520/87**

(43) Veröffentlichungstag der Anmeldung:
**12.04.89 Patentblatt 89/15**

(84) Benannte Vertragsstaaten:
**BE CH DE FR GB IT LI LU NL SE**

(71) Anmelder: **WAAGNER-BIRO
AKTIENGESELLSCHAFT
Stadlauer-Strasse 54 Postfach 11
A-1221 Wien(AT)**

(72) Erfinder: **Beckmann, Georg, Dipl. Ing. Dr.
Jacquingasse 55/10
A-1030 Wien(AT)**
Erfinder: **Wenzel, Hermann
Steinamangergasse 14
A-1210 Wien(AT)**

(74) Vertreter: **Wallner, Gerhard, Dipl.-Ing.
c/o Waagner-Biro Aktiengesellschaft
Patentabteilung Stadlauer-Strasse 54
Postfach 11
A-1221 Wien(AT)**

(54) **Aufgabeeinrichtung für Schüttgüter.**

(57) Die Erfindung betrifft eine Aufgabeeinrichtung für Schüttgüter in einem durch Trennwände (2) unterteilten Behandlungsraum, wobei im Abwurfbereich (5) Abwurfhilfen (3, 4 bzw. 14) vorgesehen sind, die als Schlitze (3) unterschiedlich lange Rinnen (4) oder auch als feststehende Abstreifeinrichtungen (14) vorgesehen sind. Durch die Ausbildung der Aufgabeeinrichtung durch ein Förderband oder Kettenförderer mit einem Obergurt (6) und einem Untergurt (7) quer zu den Trennwänden (2) ist es möglich, die Aufgabeeinrichtung auch als Mischeinrichtung bzw. als Austrageinrichtung für gröberes Gut, welches durch den Brüden mitgerissen wurde, zu benützen.

Fig. 4

## Aufgabeeinrichtung für Schüttgüter

Die Erfindung betrifft eine Aufgabeeinrichtung in Form einer Fördereinrichtung, die über ihre Länge im Abwurfbereich verteilt Abwurfhilfen aufweist für Schüttgüter.

Es sind Förderbänder (FR-PS 449.558, DE-PS 629 642, DE-OS 27 49 844) mit Abstreifeinrichtungen am Obergurt sowie zahlreiche Aufgabeeinrichtungen für Behandlungsräume bekannt, die im wesentlichen von einer punktförmigen Aufgabeeinrichtung bestimmt werden, von der sich die Schüttgüter gleichmäßig im Behandlungsraum verteilen. So wurden Trockner mit drei Zonen (AT-PS 380.331) geschaffen - einer Fluidisierungszone, einer Trocknungszone und einer Entnahmezone. Diese Aufteilung in mehrere Zonen brachte naturgemäß eine Vergrößerung der Behandlungseinrichtung mit sich, die wettbewerbsmäßig von Nachteil ist. Dazu kommt noch, daß in den einzelnen parallel geschalteten Behandlungseinrichtungen annähernd gleiche Schüttdichten, also Korngrößenverteilungen, auftreten sollen, so daß das Endprodukt gleichmäßig behandelt wird und nicht strähnenförmig anfällt.

Die Erfindung hat es sich zur Aufgabe gestellt, dieser spezifischen Anforderung gerecht zu werden, so daß der Behandlungsraum nur mehr nach wärmetechnischen Gesichtspunkten ausgelegt werden muß.

Die vorliegende Erfindung ist dadurch gekennzeichnet, daß die Aufgabeeinrichtung oberhalb und quer zu Trennwänden eines Fließbett- oder Vibrationstrockners vorgesehen ist und Abwurfhilfen zur gleichmäßigen Füllung der parallelen Kammern des Trockners aufweist. Wesentliche Ausgestaltungen der Erfindung sind in den Unteransprüchen 2 bis 6 angeführt.

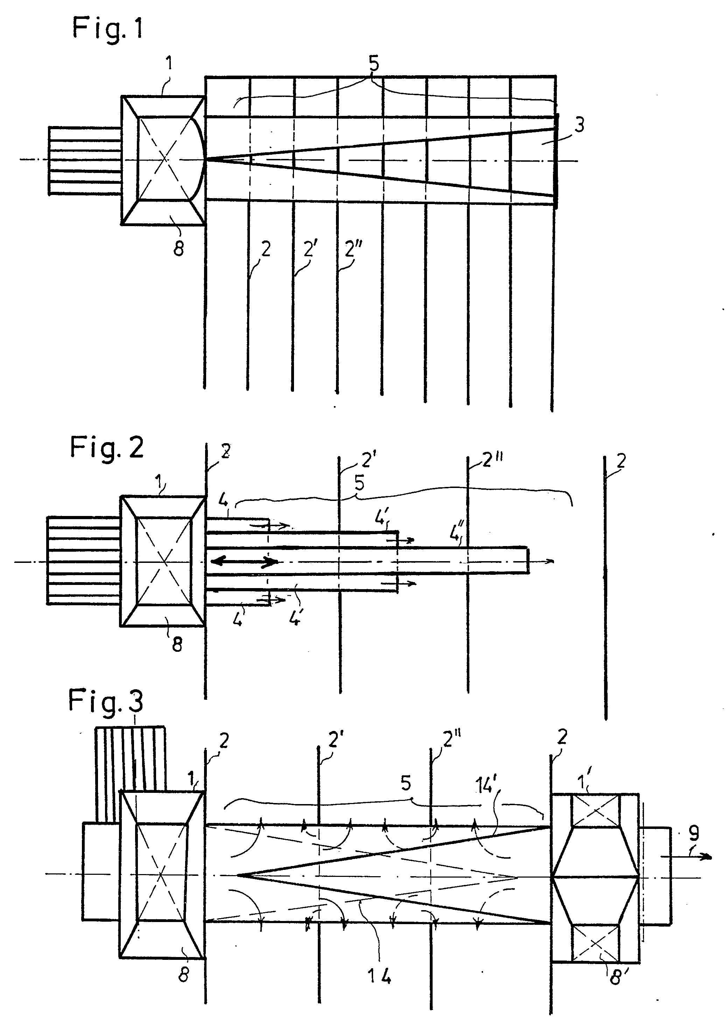

Die Erfindung ist in den angeschlossenen Fig. 1 bis 6 beispielsweise und schematisch dargestellt.

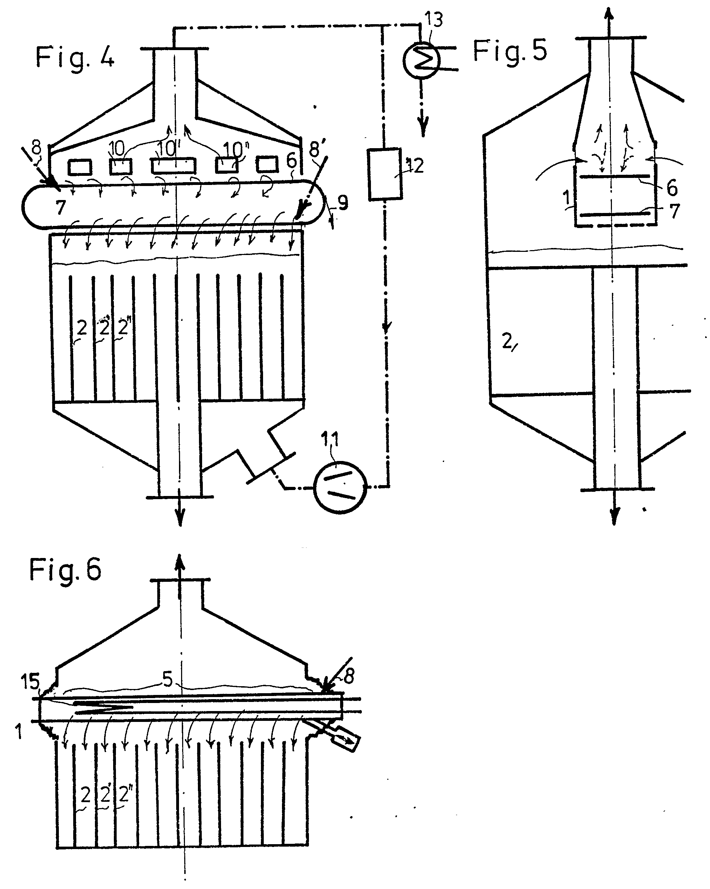

Die Fig. 1 bis 3 zeigen unterschiedliche Aufgabeeinrichtungen im Grundriß, während die Fig. 4 bis 6 entsprechende Einrichtungen im Auf- und Kreuzriß darstellen.

In Fig. 1 ist eine Aufgabeeinrichtung 1 in Form eines Vibrationsapparates oder als Förderschnecke ausgebildet, bei der das aufzugebende Gut in einem Trichter 8 aufgegeben wird und über eine Fördereinrichtung in den Behandlungsraum eingebracht wird. Der Behandlungsraum ist durch Trennwände 2, 2', 2" in mehrere parallel geschaltete Behandlungseinrichtungen unterteilt, die durch die Aufgabeeinrichtung gleichmäßig mit Schüttgut beaufschlagt werden sollen. Zu diesem Zweck weist die Aufgabeeinrichtung an ihrer Unterseite bzw. das Hüllrohr der Förderschnecke als Abwurfhilfe einen sich in Förderrichtung erweiternden Schlitz 3 auf, durch den immer wieder Schüttgut aus benachbarten Zonen der Födereinrichtung abgeworfen wird. Dieser Schlitz kann sich kontinuierlich erweitern oder auch entsprechend der Anordnung der Trennwände 2, 2', 2" stufenweise vergrößern. Auf jeden Fall ist die Aufgabeeinrichtung oberhalb des Behandlungsraumes vorgesehen, wobei die Aufgabeeinrichtung quer zu den Trennwänden zumindest im Abwurfbereich 5 verläuft.

Fig. 2 zeigt eine ähnliche Einrichtung, bei der die Aufgabeeinrichtung Teilrinnen 4, 4', 4" unterschiedlicher Länge aufweist, die nach dem Vibrationsprinzip (Doppelpfeil) betrieben werden und die als Abwurfhilfe das einzubringende Gut zwischen den Trennwänden 2, 2', 2" des Trockners abwerfen.

In Fig. 3 ist eine doppelte Aufgabeeinrichtung nach dem Förderbandsystem dargestellt, bei der zwei Aufgabeeinrichtungen 1 bzw. 1' vorgesehen sind, die unterschiedliche Aufgabetrichter 8, 8' aufweisen, wobei der Trichter 8 auf den Obergurt eines Förderbandes und der Trichter 8' auf den Untergurt des Förderbandes abgestimmt ist, so daß unterschiedliche Schüttgüter im einstellbaren Mischverhältnis in die Behandlungseinrichtung eingebracht werden können. Derartige Aufgabeeinrichtungen sind insbesondere für Kohlentrockner mit sehr feuchter Kohle zweckmäßig, wo es infolge der hohen Feuchtigkeit zu Verklebungen des zu behandelnden Schüttgutes im Fließbett- oder Vibrationstrockner kommt. Um diesen Mißstand zu vermeiden, wird in einem feuchtigkeitsabhängenden Mischungsverhältnis der feuchten Kohle trockene, also nicht klebende Kohle zugemischt, so daß das Trocknungsverfahren nicht durch Verklebungen beeinträchtigt wird. Dies hat aber auch noch den zweiten Vorteil, daß dadurch ein Teil der durch das Trocknungsverfahren erhitzten Kohle ihre Abwärme sozusagen in das Verfahren wieder einbringt, so daß im Trockner selbst weniger Wärme eingebracht werden muß. Zur gleichmäßigen Verteilung des abzuwerfenden Schüttgutes auf die einzelnen parallel geschalteten Behandlungseinrichtungen sind keilförmige Abstreifeinrichtungen 14, 14' am Obergurt 6 und am Untergurt 7 jeweils gegenläufig angeordnet vorgesehen. Wird nun der von der Behandlungseinrichtung abziehende Brüden über das Förderorgan ähnlich wie in Fig. 4 abgezogen, so kann der schüttgutfreie Teil, also nach der Abwurfhilfe 14', als Staubaustrag verwendet werden, wobei der Staub dann gemäß Pfeil 9 aus dem Verfahren ausgeschleust wird.

In Fig. 4 ist eine Einrichtung gemäß Fig. 3 in einem Fließbetttrockner eingezeichnet, bei dem also zwei unterschiedliche Schüttgüter über den Obergurt 6 bzw. Untergurt 7 in den Behandlungsraum eingebracht werden, wozu auf beiden Seiten Trichter 8 bzw. 8′, die durch Pfeile symbolisiert sind, vorgesehen sind. Der abströmende Brüden strömt durch Öffnungen 10, 10′, 10″ in den Raum oberhalb des Förderbandes, wird dort verlangsamt, so daß sich die Schleppkraft vermindert, wodurch das gröbere Korn der mitgerissenen festen Substanzen aus dem Schüttgut abgeschieden wird und zu Boden fällt, wobei es durch Leiteinrichtungen auf den schüttgutfreien Raum der Aufgabeeinrichtung 1 fällt, die dann den Austrag gemäß Pfeil 9 ermöglicht. Der abziehende Brüden kann dann über ein Zirkulationsgebläse 11 nach einer Feinentstaubung 12 rezirkuliert werden, so daß die Wärmeverluste gering sind. Der bei der Trocknung entstehende Überschußbrüden wird in einem Kondensator 13 niedergeschlagen. Durch den geschlossenen Kreislauf kann praktisch keine Umweltbelastung auftreten, so daß diese Anlage auch im dichtbesiedelten Bereich betrieben werden kann.

In Fig. 5 ist ein Kreuzriß zur Fig. 4 dargestellt.

In Fig. 6 ist eine weitere Konstruktionsvariante zu den Fig. 1 bis 3, aber im Aufriß, dargestellt, wobei als Aufgabeeinrichtung 1 eine Vibrationsrinne vorgesehen ist, die eine Beheizungseinrichtung 15 trägt, mit der somit eine zweistufige Trocknung ermöglicht wird. Bei dieser Anlage ist auch die Behandlungseinrichtung, also der Trockner, der durch Trennwände 2, 2′, 2″ unterteilt ist, als Vibrationsgerät dargestellt, bei dem aber der Antrieb im rechten Winkel zum Antrieb der Aufgabeeinrichtung pulsiert, aber nicht dargestellt ist.

## Ansprüche

1) Aufgabeeinrichtung in Form einer Fördereeinrichtung, die über ihre Länge im Abwurfbereich verteilt Abwurfhilfen aufweist, für Schüttguter, dadurch gekennzeichnet, daß die Aufgabeeinrichtung (1) oberhalb und quer zu Trennwänden (2,2′, 2″) eines Fließbett- oder Vibrationstrockners vorgesehen ist und Abwurfhilfen (3,4) zur gleichmäßigen Füllung der parallelen Kammern des Trockners aufweist.

2) Aufgabeeinrichtung nach Anspruch 1, dadurch gekennzeichnet, daß die Aufgabeeinrichtung (1) als Vibrationsfördereinrichtung ausgebildet ist und als Abwurfhilfe über zumindest einen Teil ihrer Länge Teilrinnen (4,4′,4″) mit unterschiedlicher Länge oder Unterteilungen aufweist, die den entsprechenden Teilstrom in die parallelen Kammern des Trockners zwischen den Trennwänden (2,2′,2″) einfüllen (Fig.2).

3) Aufgabeeinrichtung nach Anspruch 1, dadurch gekennzeichnet, daß die Aufgabeeinrichtung (1) als Förderschnecke oder als Vibrationsrinne ausgebildet ist, deren Hüllrohr im Bodenbereich oder deren Boden als Abwurfhilfe einen sich in Förderrichtung erweiternden Schlitz (3) aufweist (Fig.1).

4) Aufgabeeinrichtung nach Anspruch 1, dadurch gekennzeichnet, daß die Aufgabeeinrichtung (1) als Mischeinrichtung ausgebildet ist, indem der Obergurt (6) und der Untergurt (7) eines Förderbandes als Aufgabeeinrichtung zweier unterschiedlicher Schüttgüter ausgebildet ist und insbesondere als Abwurfhilfe unterschiedlich lange feststehende Abstreiffinger angeordnet sind, die das abzuwerfende Gut vom Rand des Gurtes abziehen (Fig. 3 und 4).

5) Aufgabeeinrichtung nach Anspruch 1 oder 4, dadurch gekennzeichnet, daß die Aufgabeeinrichtung auch als Austrageinrichtung einer Staubfraktion des Schüttgutes ausgebildet ist, indem der Abzug des staubaustragenden Fluides über den Gurt eines Förderbandes geführt ist und bei absinkender Schleppkraft das gröbere Korn auf den schüttgutfreien Teil des Gurtes fällt, während der andere Teil des Gurtes oder beide Gurte als Aufgabeeinrichtung einer Mischeinrichtung ausgebildet sind (Fig. 4).

Fig.1

Fig.2

Fig.3

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-2 185 724 (SCM CORP.) <br> * Seite 2, Zeilen 51-63; Figuren * | 1 | B 65 G 69/04 |
| A | | 2,3 | |
| Y | GB-A-2 090 216 (FOSTER WHEELER ENERGY) <br> * Zusammenfassung; Figuren * | 1 | |
| A | | 5 | |
| A | FR-A-2 510 081 (VOEST ALPINE) <br> * Seite 1, Zeile 1 - Seite 2, Zeile 33; Figuren * | 1-3 | |
| A | FR-A- 784 625 (H. SIMON) <br> * Insgesamt * | 4 | |

**RECHERCHIERTE SACHGEBIETE (Int. Cl.4)**

B 65 G
B 27 N

Der vorliegende Recherchenbericht wurde für alle Patentansprüche erstellt

| Recherchenort | Abschlußdatum der Recherche | Prüfer |
|---|---|---|
| DEN HAAG | 22-12-1988 | VAN ROLLEGHEM F.M. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument